(19) Europäisches Patentamt / European Patent Office / Office européen des brevets

(11) **EP 2 779 290 A1**

(12) **EUROPEAN PATENT APPLICATION**
published in accordance with Art. 153(4) EPC

(43) Date of publication:
**17.09.2014 Bulletin 2014/38**

(51) Int Cl.:
**H01M 8/04** (2006.01)   **H01M 8/02** (2006.01)
**H01M 8/06** (2006.01)   **H01M 8/12** (2006.01)

(21) Application number: **12846992.1**

(22) Date of filing: **06.11.2012**

(86) International application number:
**PCT/JP2012/078722**

(87) International publication number:
**WO 2013/069631 (16.05.2013 Gazette 2013/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2011   JP 2011245893**

(71) Applicant: **JX Nippon Oil & Energy Corporation
Chiyoda-ku
Tokyo 100-8162 (JP)**

(72) Inventors:
• **IBUKA, Takeshi**
  **Tokyo 100-8162 (JP)**
• **SATO, Yasushi**
  **Tokyo 100-8162 (JP)**

(74) Representative: **Grünecker, Kinkeldey,
Stockmair & Schwanhäusser
Leopoldstrasse 4
80802 München (DE)**

(54) **SOLID-OXIDE FUEL CELL SYSTEM, AND START-UP CONTROL METHOD THEREFOR**

(57)     An object of the invention is to improve durability of a SOFC system and secure favorable power generation performance during the actual useful service period of the system. In the SOFC system, the fuel gas flow rate to the fuel cell stack at the time of the start of start-up is set to the maximum fuel gas flow rate at the time of start-up control that is less than or equal to 1.3 times the maximum fuel gas flow rate $Fg_{MAX}$ at the time of the rated power generation, the fuel gas flow rate F2 until the temperature T of the fuel cell stack reaches the first temperature T1 after start of the temperature increase, at which the reduction of the oxidized Ni in the fuel cell stack is performed, is set to be less than or equal to F1, and thereafter, until the start of the power generation, fuel gas flow rate F3 is further reduced from F2, and the average fuel gas flow rate $F_{AVE}$ from the start of start-up control to the start of the power generation is set to be equal to or greater than 0.6 times the average fuel gas flow rate $Fg_{AVE}$ at the time of the rated power generation.

*FIG. 11*

**Description**

TECHNICAL FIELD

The present invention relates to a solid-oxide fuel-cell system (hereinafter referred to as an "SOFC system") and a start-up control method for the same.

BACKGROUND ART

Attention has been focused on SOFC systems as a next-generation stationary power source with low $CO_2$ emissions, from the viewpoint of high power generation efficiency of SOFC systems. In recent years, technologies have been actively developed, and thus, a problem in durability caused by an operation at a high temperature of 600 to 1,000°C has been overcome. In addition, the operation temperature has steadily been reduced.

As such a SOFC system, a system disclosed in Patent Document 1 is known.

The system is configured to include a reformer that generates a hydrogen-enriched fuel gas (reformed gas) by a reforming reaction; a fuel cell stack (assembly of fuel cells) which allows reacting the fuel gas from the reformer with air to generate power; and a module case which surrounds the reformer and the fuel cell stack, in the inside of the module case, and excessive fuel gas is combusted to maintain the reformer and the fuel cell stack in a high temperature state. Incidentally, these components are substantial parts of the system and are collectively referred to as a hot module.

In addition, each cell constituting the fuel cell stack is an anode supported solid oxide fuel cell, and includes a cell support which is made of a porous substance having a composition containing at least nickel (Ni) metal and is provided therein with a gas passage through which the fuel gas from the reformer passes from one end to the other end. The cell is configured by laminating a fuel electrode layer, a solid oxide electrolyte layer, and an air electrode layer on the cell support. Moreover, the reformer and the fuel cell stack are heated by combusting excessive fuel gas at the other end of the gas passage.

CITATION LIST

PATENT DOCUMENT

Patent Document 1: Japanese Patent No. 4565980

SUMMARY OF THE INVENTION

PROBLEMS TO BE SOLVED BY THE INVENTION

In stationary fuel-cell systems including a SOFC system, the system needs to be stopped at some frequency for various reasons, such as a user's choice, a purpose of exhibiting energy saving effect at a maximum, and a problem in a device or a utility.

Therefore, in order to put the SOFC system to practical use as a stationary power generation device, the SOFC system needs to have durability for about 10 years with the assumption that start-and-stop operation will be repeated.

The present inventors found that, in the fuel cell stack of the SOFC system, if the supply of reformed gas to the fuel cell stack is stopped after the power generation stops, air from the outside flows and is diffused into the fuel electrode of the fuel cell, and thus the cell support having a composition containing nickel metal is oxidized by the air in a high temperature state, and thus, it is likely that the fuel cell or the fuel cell stack will be damaged.

Moreover, they found that the degree of damage to the cell is dependent on the degree of oxidation of the cell support after the power generation stops, and the cell damage markedly occurs with increasing frequency at a certain degree of oxidation or more.

That is to say, the oxidation degree of the cell support is a degree at which nickel metal in the cell support is oxidized due to air diffusion to the fuel electrode layer after the power generation stops, and the oxidation degree can be defined by using a Ni oxidation degree defined by the following formula.

$$\text{Ni oxidation degree} = \text{(Number of moles of Ni atoms which are present as NiO among Ni atoms contained in the cell support)} / \text{(Number of moles of all Ni atoms in the cell support)} \times 100\ (\%)$$

Furthermore, the present inventors found that it is necessary to suppress oxidation of nickel metal after the stop of the system in order to improve durability of the system.

However, it is difficult to make the oxidation amount of nickel metal after the stop of the system stop 0 (zero). Moreover, in a case in which the system is rapidly shut down in a high temperature state (the current sweep stop and the supply stop of fuel and water are performed at the same time because a serious problem occurs), and the oxidation amount of nickel metal is increased.

In view of the abovementioned problem, they found out that the system durability can also be improved by improving a control method used when nickel metal oxidized after the stop of the system is reduced at the time of system start-up.

From the above viewpoint, an object of the invention is to secure favorable power generation performance over a long period of time and improve the system durability by controlling at the time of system start-up.

MEANS FOR SOLVING THE PROBLEMS

Therefore, the invention relates to a solid-oxide fuel-cell system and a start-up control method for the same, the solid-oxide fuel-cell system is configured to include: a reformer which generates a hydrogen-enriched fuel gas by a reforming reaction; a fuel cell stack which is provided with a passage of the fuel gas, including a cell support made of a porous substance having a composition containing nickel metal, and allows to react the fuel gas with air to generate power; and a module case which surrounds the reformer and the fuel cell stack, in the inside of which excessive fuel gas of the fuel cell stack is combusted to increase temperatures of the reformer and the fuel cell stack such that the reformer and the fuel cell stack are maintained in a high temperature state, and a method for the same. The solid-oxide fuel-cell system and the start-up control method for the same are configured as follows.

A decrease control of a fuel gas flow rate supplied to the fuel cell stack from the reformer is performed in response to an elapsed time so that a maximum temperature difference of a power generation unit of the fuel cell stack is maintained below a limit temperature difference that is set in consideration of durability of the power generation unit in a temperature increase step before power generation that increases the temperature of the fuel cell stack to reduce the oxidized nickel metal when the system starts up (start-up control unit).

EFFECT OF THE INVENTION

According to the invention, in the step before power generation, in which the temperature is increased after the stop of the system start-up, when the nickel metal in the cell support oxidized during system stop before the start-up is reduced by the fuel gas from the reformer, by the control of decreasing the fuel gas flow rate in response to an elapsed time so that the maximum temperature difference of the fuel cell stack power generation unit is maintained below the limit temperature, it is possible to relieve the stress generated in the power generation unit to improve durability of the power generation unit and the system, thereby securing good power generation performance.

Furthermore, since it is sufficient to supply the fuel gas flow rate that is necessary and enough to secure durability of the power generation unit as described above, it is possible to quickly terminate the start-up control and start the power generation while securing the durability, and thus, the fuel consumption can also be reduced.

BRIEF DESCRIPTION OF THE DRAWINGS

Fig. 1 is a longitudinal cross-sectional view schematically illustrating a hot module of a SOFC system according to an embodiment of the invention.

Fig. 2 is a transverse cross-sectional view of a fuel cell stack of the system in planar view.

Fig. 3 is a view illustrating a correlation between a Ni oxidation degree and a cell voltage drop rate.

Fig. 4 is a view illustrating a correlation between a Ni oxidation degree and a voltage drop rate after performing a start-and-stop operation 240 times.

Fig. 5 is a view illustrating a relationship between a maximum stack temperature at the time of stopping a reformed gas and a Ni oxidation degree.

Fig. 6 is a flowchart of stop control.

Fig. 7 is a view illustrating a relationship between a power generation unit maximum temperature difference at the time of start-up and a voltage drop rate.

Fig. 8 is a view illustrating a relationship between a maximum fuel gas flow rate at the time of start-up/a maximum fuel gas flow rate at the time of the rated power generation, and the power generation unit maximum temperature difference at the time of start-up.

Fig. 9 is a view illustrating a relationship between an average fuel gas flow rate at the time of start-up/an average fuel gas flow rate at the time of the rated power generation, and a temperature increase time until the power generation can be performed.

Fig. 10 is a flow chart of a first embodiment of the start-up control according to the invention.

Fig. 11 is a time chart illustrating changes in a stack temperature and a fuel gas flow rate at the time of the start-up control of the first embodiment.

Fig. 12 is a flow chart of a second embodiment of the start-up control according to the invention.

Fig. 13 is a time chart illustrating changes in the stack temperature and the fuel gas flow rate at the time of the start-up control of a second embodiment.

MODE FOR CARRYING OUT THE INVENTION

Hereinbelow, embodiments of the invention will be described in detail.

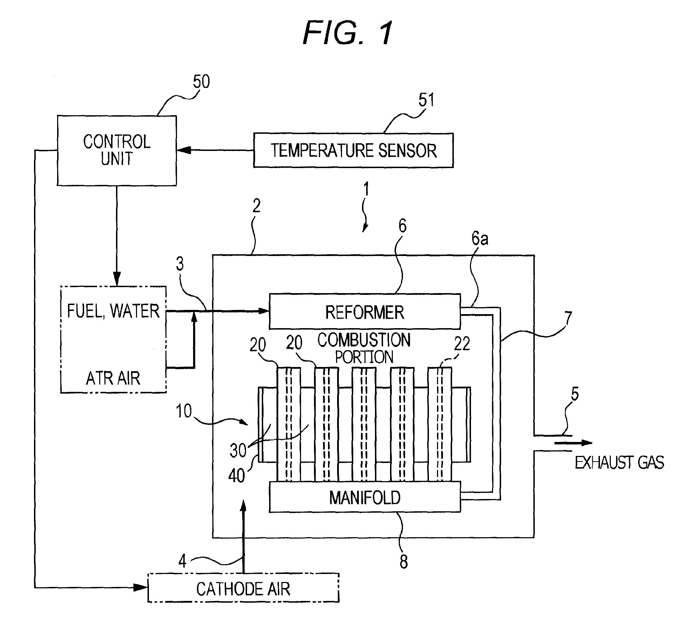

Fig. 1 is a longitudinal cross-sectional view schematically illustrating a hot module that is a substantial part of a SOFC system according to an embodiment of the invention.

A hot module 1 is configured to accommodate a reformer 6 and a fuel cell stack 10 in a module case 2.

The module case 2 is configured such that the inner surface of a rectangular-parallelepiped outer frame made of a heat-resistant metal is sealed with a heat insulation material. In addition, a supply tube 3 of fuel, water, and air for autothermal reforming reaction (ATR) and a supply tube 4 of air for cathode are provided from the outside into the case. Moreover, an exhaust port 5 is further included. As a fuel (raw fuel), city gas, LPG, methanol, dimethyl ether (DME), kerosene, and the like are used.

The reformer 6 is disposed at the upper portion in the module case 2 (upper side of the fuel cell stack 10) and the supply tube 3 of fuel, water, and air for ATR from the outside is connected thereto.

The case of the reformer 6 is formed by a heat-resistant metal. A catalyst chamber that accommodates a reforming catalyst used for reforming a raw fuel such as city gas, LPG, methanol, DME, and kerosene to be a hydrogen-enriched fuel gas (reformed gas), and a water vaporizing chamber that vaporizes water for a steam reforming reaction using a reforming catalyst are formed in the case.

One end of a reformed gas supply tube 7 is connected to a reformed gas outlet 6a of the reformer 6, and the other end of the reformed gas supply tube 7 is connected to a hollow manifold 8 for distributing a reformed gas that is disposed at the lower side of the fuel cell stack 10.

The fuel cell stack 10 is disposed at the lower portion in the module case 2 (lower side of the reformer 6) and is held on the manifold 8.

The fuel cell stack 10 is an assembly of plural fuel cells 20. The plural longitudinal cells 20 (for simplicity, five cells are illustrated in Fig. 1) are arranged in a row in the transverse direction such that collector members 30 are interposed between the side surfaces of the cells 20. In the same manner, the plural cells 20 are arranged in a matrix form by arranging the plural cells in plural rows behind the row of Fig. 1.

A gas passage 22 is formed at the inside of each fuel cell 20 from the lower end to the upper end. The lower end of each gas passage 22 is communicated with the manifold 8, and a combustion portion used for an excessive fuel gas is formed at the upper end thereof.

The supply amount of fuel, water, and ATR air to the reformer 6 and the supply amount of air for cathode into the module case 2 are controlled by a control unit 50. For such a control, a temperature sensor 51 or the like that measures a temperature of the fuel cell stack 10 is provided in the module case 2 and a temperature measurement signal or the like of the temperature sensor 51 is input to the control unit 50. Here, the temperature (hereinafter, referred to as a stack temperature) of the fuel cell stack 10 measured by the temperature sensor 51 is a temperature of the power generation unit (each of the fuel cells 20, in particular, a cell support and a cell configuration layer to be described later) of the fuel cell stack 10, but the upper end portion close to the combustion portion is near the maximum temperature in the module case 2, and a lower end portion close to the manifold 8 is near the minimum temperature, resulting in a large temperature difference. Accordingly, a temperature of a vertically intermediate portion is measured as an average temperature.

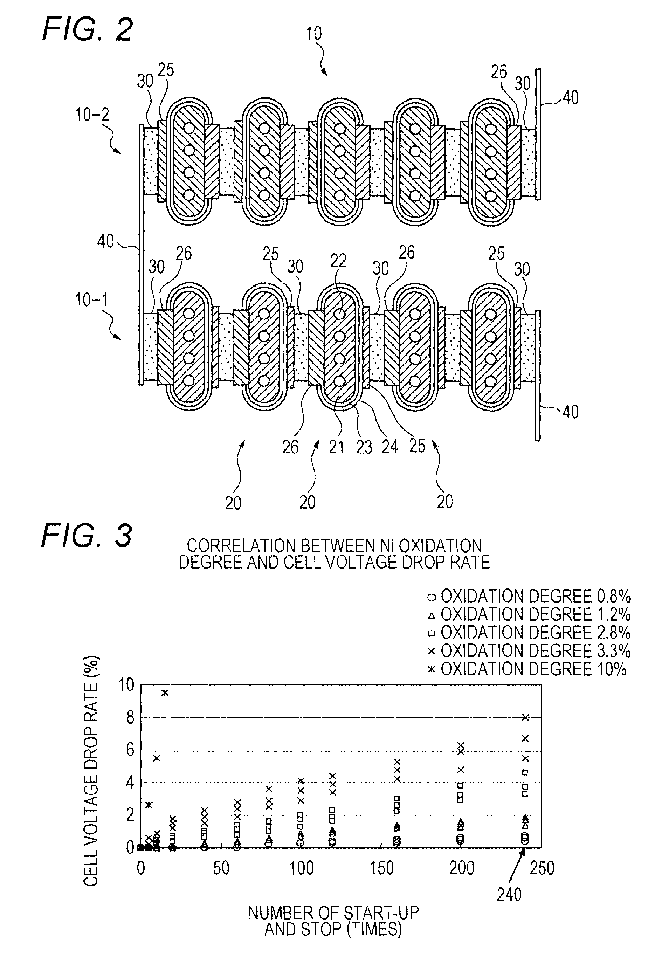

Next, each fuel cell 20 constituting the fuel cell stack 10 will be described with reference to Fig. 2.

Fig. 2 is a transverse cross-sectional view of the fuel cell stack in plane view.

Each of the fuel cells 20 is an anode supported solid oxide fuel cell and includes a cell support 21 (provided with the gas passage 22), a fuel electrode layer 23, a solid oxide electrolyte layer 24, an air electrode layer 25, and an interconnector 26.

The cell support 21 is made of a porous substance having a composition including at least nickel metal. The cell support 21 is a plate-shaped piece having a flat oval transverse cross section and extending in the longitudinal direction (vertical direction), and has planar both side surfaces (planar surfaces) and semi-cylindrical front and rear surfaces. One end (lower end) of the cell support 21 is inserted to an opening of the upper surface of the manifold 8 to be fitted gas-tight thereto. The other end (upper end) is opposite to the lower surface of the reformer 6. The plural gas passages 22 which are arranged in parallel to each other and through which a reformed gas from the manifold 8 flows are provided in the inside of the cell support 21 from one end (lower end) to the other end (upper end) in the longitudinal direction.

The interconnector 26 is provided on one planar surface (at the left side of a fuel cell stack 10-1 of the first row in Fig. 2) of the cell support 21.

The fuel electrode layer 23 is laminated on the other planar surface (at the right side of the fuel cell stack 10-1 of the first row in Fig. 2) of the cell support 21 and on the front and rear surfaces and the both ends thereof are joined to both ends of the interconnector 26.

The solid oxide electrolyte layer 24 is laminated on the fuel electrode layer 23 so as to cover the entire fuel electrode layer 23, and each end of the solid oxide electrolyte layer are joined to each end of the interconnector 26.

The air electrode layer 25 is laminated on the main portion of the solid oxide electrolyte layer 24, that is, on a portion covering the other planar surface of the cell support 21 such that the air electrode layer 25 faces the interconnector 26 to interpose the cell support 21 therebetween. Therefore, the interconnector 26 is disposed on one outside surface (at the left side of the fuel cell stack 10-1 of the first row in Fig. 2) of each cell 20 and the air electrode layer 25 is disposed on the other outside surface (at the right side).

In other words, each cell 20 includes the cell support 21 having the gas passages 22 and is configured such that the fuel electrode layer 23, the solid oxide electrolyte layer 24, and the air electrode layer 25 are laminated in this order on one surface of the cell support 21 and the interconnector 26 is further formed on the other surface of the cell support 21.

The plural fuel cells 20 are arranged in the transverse direction and are joined in a row via the collector members 30. That is, as indicated in the fuel cell stack 10-1 of the first row in Fig. 2, the plural cells 20 in a row are connected with each other in series in such a manner that the interconnector 26 disposed at the left side of each cell 20 is joined to the air electrode layer 25 of the left adjacent cell 20 via the collector member 30 and the air electrode layer 25 disposed at the right side of each cell 20 is joined to the interconnector 26 of the right adjacent cell 20 via the collector member 30.

In addition, at the rear side of the fuel cell stack 10-1 of the first row in Fig. 2, a fuel cell stack 10-2 at the second row is provided, but in the fuel cell stack 10-2 of the second row, the cells 20 are arranged in a right-left reverse direction with respect to the fuel cell stack 10-1 of the first row.

The fuel cell stack 10-1 of the first row and the fuel cell stack 10-2 of the second row are connected with each other in series in such a manner that the collector member 30 attached to the interconnector 26 of the leftmost cell 20 of the fuel cell stack 10-1 of the first row and the collector member 30 attached to the air electrode layer 25 of the leftmost cell 20 of the fuel cell stack 10-2 of the second row are connected with each other by a conductive member 40.

In the hot module 1, a fuel for producing hydrogen such as municipal gas, LPG, methanol, DME, and kerosene, and water for reforming are supplied to the reformer 6 from the supply tube 3 of fuel, water, and air for ATR. In the reformer 6, a hydrogen-enriched fuel gas (reformed gas) is generated mainly by a steam reforming reaction. The generated reformed gas is supplied to the manifold 8 for distribution through the reformed gas supply tube 7.

The reformed gas supplied to the manifold 8 is distributed to the fuel cells 20 constituting the fuel cell stack 10, and is supplied to the gas passage 22 formed in a support 21 of each cell 20, and then ascends the gas passage 22. In this process, hydrogen in the reformed gas is permeated to the inside of the cell support 21 so as to reach the fuel electrode layer 23.

On the other hand, air (oxygen-containing gas) is introduced to the inside of the module case 2 from the supply tube 4 of air for a cathode and supplied to the fuel cells 20 constituting the fuel cell stack 10. Then, oxygen in air reaches the air electrode layer 25 of each cell 20.

According to this, in each fuel cell 20, the electrode reaction of the following Formula (1) occurs in the air electrode layer 25 at the outside, and the electrode reaction of the following Formula (2) occurs in the fuel electrode layer 23 at the inside, thereby generating power.

$$\text{Air electrode: } 1/2 O_2 + 2e^- \rightarrow O^{2-} \text{ (solid electrolyte)} \qquad (1)$$

$$\text{Fuel electrode: } O^{2-} \text{ (solid electrolyte)} + H_2 \rightarrow H_2O + 2e^- \qquad (2)$$

Among the reformed gas flowing through the gas passage 22 of the support 21 in the cell 20, the reformed gas which has not been used in the electrode reaction is allowed to flow out from the upper end of the support 21 to the inside of the module case 2. The reformed gas allowed to flow out to the inside of the module case 2 is allowed to be combusted at the same time of flowing out. An appropriate ignition means (not illustrated) is provided in the module case 2. Upon the reformed gas is started to flow out to the inside of the module case 2, the ignition means is allowed to be operated so as to start combustion. In addition, among the air introduced to the inside of the module case 2, the air which has not been used in the electrode reaction is used in combustion. The temperature in the module case 2 is increased to be a high temperature of, for example, about 600 to 1,000°C due to the power generation in the fuel cell stack 10 and the combustion of excessive reformed gas. The combustion gas generated by the combustion in the module case 2 is exhausted from the exhaust port 5 to the outside of the module case 2.

The fuel cell 20 will be described in more detail.

The cell support 21 is demanded to have gas permeability (to be porous) for transmitting the fuel gas to the fuel electrode layer 23 and to have a conductive property for collecting power through the interconnector 26. The cell support 21 can be made of cermet satisfying such a demand. Specifically, the cell support 21 is made of a nickel cermet obtained by appropriately performing reduction treatment or the like on a complex oxide composition containing at least nickel oxide. The complex oxide composition may contain one or two or more kinds of metal oxide selected from at least scandium, yttrium, lanthanum, cerium, titanium, and zirconium, as components other than nickel oxide. Incidentally, by the reduction treatment, it is considered that components other than nickel oxide are not concerned with redox reaction substantially. In addition, in the complex oxide composition before the reduction treatment of the cell support 21, a ratio of the nickel oxide is set to be 50% by weight or more (50 to 90% by weight, and preferably 60 to 80% by weight).

A cell constituting layer which is formed on the cell support 21 will be further described.

The fuel electrode layer 23 is made of porous conductive ceramics.

The solid oxide electrolyte layer 24 needs to have a function as an electrolyte used to bridge electron conduction and ion conduction between electrodes and to have a gas barrier property in order to prevent leakage of a fuel gas and air. Generally, the solid oxide electrolyte layer 24 is made of a solid electrolyte containing oxide such as $ZrO_2$ and $CeO_2$.

The air electrode layer 25 is made of conductive ceramics and has gas permeability.

The interconnector 26 may be made of conductive ceramics. However, since the interconnector 26 contacts a fuel gas and air, the interconnector 26 has a reduction resistance and an oxidation resistance. Furthermore, the interconnector 26 is a dense substance in order to prevent leakage of a fuel gas flowing through the gas passage 22 formed in the cell support 21 and air flowing to the outside of the cell support 21.

The collector member 30 is configured to include a member that has an appropriate shape and is made of an elastic metal or an alloy. The conductive member 40 can be made of an appropriate metal or alloy.

Incidentally, in the SOFC system as described above, the system needs to be stopped at some frequency for various reasons such as a user's choice, a purpose of exhibiting an energy saving effect at a maximum, or a problem in a device or a utility. Due to this stop process and the following restart process, various problems in durability occur.

In particular, after stopping the supply of the reformed gas to the fuel cell stack 10 in the stop process and before the fuel cell stack 10 has not completely cooled, air flows into the cell support 21 and the fuel electrode layer 23, so that a serious problem occurs due to the oxidation of the cell support 21 or occurs when the cell support 21 is reduced from the oxidation state by restarting.

Generally, if the oxidation and reduction of the cell support containing nickel is repeated, transformation such as expansion, contraction, or bending occurs in a cell, and thus, the cell itself is damaged, or a crack or gap is generated between the cell and a member adjacent to the cell. Therefore, there is a possibility that various problems are caused, such as a drop in a cell voltage or a temperature distribution change of the reformer according to a change in the combustion state in the upper portion of the cell.

It is considered that such problems occur due to the following mechanism as described below.

In the stop process of the SOFC system, the supply of the fuel gas (reformed gas) is generally continued even after the power generation is stopped. The fuel gas which has not been used in the power generation is reacted with air supplied from the circumference in the combustion space above the fuel cell stack 10 so as to be combusted, but the fuel cell stack 10 is gradually cooled down during this combustion. When the fuel cell stack 10 is cooled down to a set temperature, the supply of the raw fuel to the reformer 6 is stopped and the supply of the reformed gas to the fuel cell stack 10 is also stopped at the same time. Since the temperature of the reformer 6 is decreased in accordance with the temperature decrease of the fuel cell stack 10, there is a lower limit of the temperature at which the reformed gas is continuously supplied in response to the request of the reformer 6 such as a catalyst activity used in the reforming reaction or vaporization and dispersion of water used in reforming. Accordingly, the supply of the reformed gas needs to be stopped at any time point from a state of stopping power generation to a complete stop state in which the fuel cell stack 10 or the reformer 6 is cooled down to room temperature.

When the supply of the reformed gas is stopped, air supplied from the supply tube 4 of air for cathode passes through the gas passage 22 of the cell support 21 and then back diffusion of the air occurs. In view of the start of inflow of air and a temperature of the support of each unit of the fuel cell stack 10 at this time point, if inflow of air is started at or above a temperature at which nickel metal in the support 21 is subjected to oxidation, nickel is oxidized. Since the support 21 is a complex (cermet) of metal nickel and oxide ceramics, nickel metal in the support 21 is partially turned into nickel oxide. The cell is gradually cooled down through such a process, and eventually, the oxidation degree converges to a certain degree such that the system is completely stopped.

Next, when the system is restarted from a state in which nickel in the support 21 is partially oxidized, a raw fuel and water, and if needed, air for ATR, are introduced to the reformer 6, and then a hydrogen-containing reformed gas is supplied to the fuel cell stack 10 by a steam reforming reaction (SR) or a partial oxidation reaction (POX). According to this, most of the partially-oxidized nickel in the support 21 is returned to a state of metal nickel which is completely reduced again.

The present inventors found that there is a strong correlation between a case in which oxidation and reduction of nickel metal in the cell support 21 is repeated in this manner and a process from cell voltage drop to cell damage.

In other words, the present inventors found that the cell damage risk of the fuel cell stack as described above can be determined by a transition of cell voltages. They have further continued the research and then found that, when the oxidation degree after the stop is increased, the voltage drop is increased, and the increase in the voltage drop is suppressed by reducing the fuel gas flow rate in response to the elapsed time so that the maximum temperature difference of the fuel cell stack power generation unit is maintained below the limit temperature difference at the time of start-up.

Herein, regarding the nickel in the cell support 21, although the nickel is present as nickel oxide after calcining treatment and before reduction treatment of the support, most of the nickel is reduced to metal nickel by performing the reduction treatment after the cell configuration is completed or after the cells are constituted as a stack. However, this state is disrupted at the time when the reducing gas is stopped to flow in accordance with the stop of the fuel cell system, and a certain ratio of nickel atoms are oxidized by oxygen in air reversely diffused to the gas passage 22 in the cell support 21 such that the nickel is present as nickel oxide.

Therefore, in the present embodiment, a degree to which nickel metal in the cell support 21 is oxidized after stopping the power generation is considered as an index for durability evaluation. This oxidation degree is defined as a Ni oxidation degree by the following formula.

Ni oxidation degree = (Number of moles of Ni atoms that are present as NiO among Ni atoms contained in the cell support) / (Number of moles of all Ni atoms in the cell support) x 100 (%)

Herein, the Ni oxidation degree may be obtained by measuring the cell support with an instrumental analytical technique such as XRD or XPS. However, in a more direct manner, if the ratio of nickel contained in the cell support is already known, the Ni oxidation degree can be calculated from an increase and decrease in weight before and after performing a certain oxidation or reduction treatment.

In one example, it is known that, when the nickel metal in the cell support is subjected to air baking for a sufficient time of 12h or more at a high temperature of approximately 900°C, almost all atoms are oxidized and are converted into a nickel oxide NiO. In the case of using a cell support in which a weight ratio of nickel oxide contained in the cell support after baking treatment and before reduction treatment is 70%, when the cell support components other than nickel are not affected by the redox, the oxidation is performed at 900°C from the reduction state in which all nickel atoms are in a metallic state, and as a whole, there is a weight increase of $1/(1 - 16/(58.7 + 16) \times 0.7) = 1.176$ times, that is, a weight increase of 17.6%. Here, the atomic weight of nickel Ni was 58.7 and the atomic weight of oxygen O was 16.

However, since a part of the nickel atoms is already oxidized after the stop, when performing the oxidation at 900°C from the partial oxidization state after the stop, the weight increase is smaller than the abovementioned calculated value. That is, if 25% of the total nickel atoms is NiO after the stop, since the weight increase of $(1 + 0.176 \times 0.25) = 1.044$ times is already obtained by the conversion from the complete reduction state to the partial oxidization state, it remains in the weight increase of $1.176/1.044 = 1.126$ times, that is, the weight increase of 12.6%.

Thus, if the weight increase to the complete oxidization state is measured on the cell support after the stop (partial oxidization state), it is possible to know the weight increase from the complete reduction state to the partial oxidization state, based on the measured weight increase and the weight increase from the complete reduction state to the complete oxidization state, and it is possible to know the oxidation degree of the partial oxidization state, based on the ratio of the weight increase from the complete reduction state to the complete oxidization state to the weight increase from the complete reduction state to the partial oxidization state.

In the abovementioned example, by measuring the weight increase (1.126 times) from the partial oxidization state to the complete oxidization state, the weight increase from the complete reduction state to the partial oxidization state is $1.176/1.126 = 1.044$, and the Ni oxidation degree in the partial oxidization state is $(1.044 - 1)/(1.176 - 1) \times 100 = 25(\%)$.

Thus, t the Ni oxidation degree in a partial oxidation state can be obtained by the following formula based on a maximum weight change ratio (increase ratio) $R_{max}$ (to be obtained in advance) from the complete reduction state to the complete oxidation state, and a weight change ratio (increase ratio) R2 from the partial oxidation state after stopping the power generation to the complete oxidation state.

$$\text{Ni oxidation degree} = ((R_{max}/R2) - 1) / (R_{max} - 1) \times 100 \ (\%)$$

Herein, $R_{max}/R2$ corresponds to a weight change ratio R1 from the complete reduction state to the partial oxidation state.

When the weight change is measured, the cell support itself may be used actually as a sample to perform the weight measurement, but it is more preferably to use a measuring instrument such as TG-DTA

Furthermore, although the method of measuring the Ni oxidation degree of the support based on the weight increase according to the high-temperature oxidation has been illustrated in the abovementioned example, If there is a means capable of measuring a weight while a reducing gas such as hydrogen gas flow flows under heating, the Ni oxidation degree can be similarly calculated from a decrease in weight to the complete reduction. That is, the weight change ratio "$R1 = W_x/W_0$" from the complete reduction state to the partial oxidation state is obtained from a weight $W_x$ in the partial oxidation state and a weight $W_0$ in the complete reduction state, so that "Ni oxidation degree = $(R1 - 1) / (R_{max} - 1)$ x 100 (%)" can be obtained. In a case in which the Ni oxidation degree is low, the above method may be more preferably used.

Therefore, in any case, the Ni oxidation degree can be obtained based on the change in weight (maximum weight change ratio) which has been determined in advance between the complete reduction state and the complete oxidation state and the change in weight (change ratio) from the partial oxidation state after the power generation stops to the complete oxidation or reduction state.

Next, a correlation between durability of the cell and a Ni oxidation degree, more specifically, a threshold value of the Ni oxidation degree that is an index of durability evaluation will be discussed.

In general, the durability of the cell is preferably monitored by a power generation voltage of the cell at the time of current sweep under a constant operation condition of the system. If any problem occurs in the cell stack structural body including the cell support or a peripheral member, even in a case of gas leakage due to cell support damage, an increase in resistance according to detaching of a cell laminated structure, degradation in the contact state with current collector metal according to cell deformation, or the like, the problem may be observed as a voltage drop of the cell stack in many cases. Therefore, durability (residual life) of the cell stack can be presumed by a change (drop) in the cell voltage with respect to the initial stage. In order to suppress such a cell voltage drop and maintain a cell voltage to be a sufficient level even after the start-and-stop operation is performed 240 times that is the practically usable number of times of the start-and-stop operation, it is necessary to suppress the Ni oxidation degree after the stop to be low.

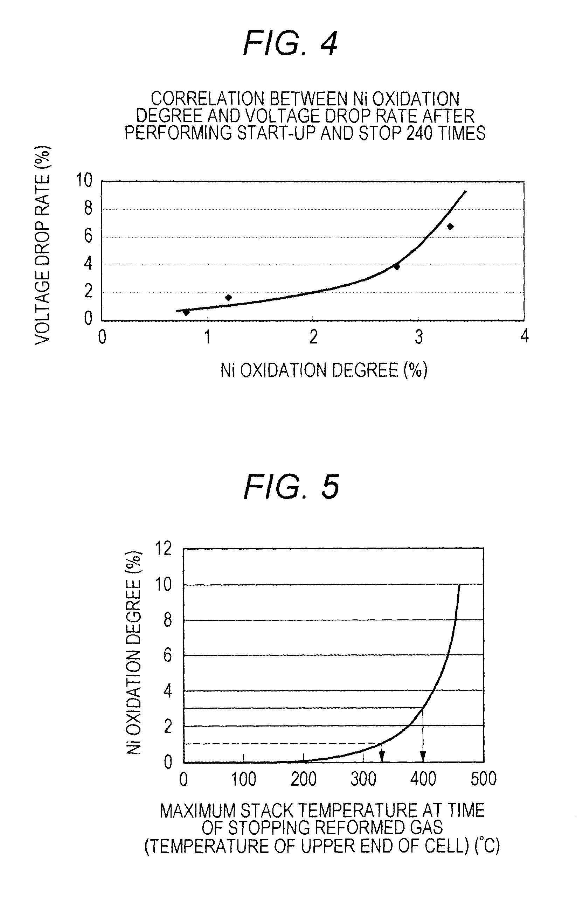

Fig. 3 illustrates a result obtained by plotting a change in cell voltage drop rates (particularly, a cycle-dependent voltage drop rate due to the start-and-stop operation to be described below) of each system in a verification test in which plural systems are started and stopped under conditions of different Ni oxidation degrees after the stop In addition, Fig. 4 is a view obtained by focusing data obtained when performing the start-and-stop operation 240 times among the results of Fig. 3 and in which the horizontal axis indicates a Ni oxidation degree and the vertical axis indicates an average of voltage drop rates.

The cell voltage drop rate is expressed by an initial voltage $V_{ini}$ and a voltage $V_{final}$ after service life (or after an accelerated durability test on the assumption of service life), that is, expressed as "$(1 - V_{final} / V_{ini})$ x 100 [%]", based on voltage summation V of the cell stack under a rated equivalent operation condition (generally, at the time of the current sweep of 0.2 to 0.3 A/cm$^2$).

From the results of Fig. 3 and Fig. 4, in the system having a high Ni oxidation degree after the stop , the cell voltage drop rate is large and a change thereof is rapid. In order to improve durability, it can be understood that it is effective to suppress the Ni oxidation degree after the stop to be low.

Incidentally, in general, the service life required for a household stationary fuel-cell system is at least 10 years and preferably 15 years. If cases of stop by a user's choice, stop corresponding to an operation of a gas meter provided in a fuel utility line, or stop at the time of emergency (when a slight error occurs) or maintenance are included, the number of times of the start-and-stop operation to be envisioned for 10 years is estimated to be 240 times. Therefore, the system is also required to be resistant to at least 240 times of the start-and-stop operation.

In view of the fuel-cell system as an energy saving device, an acceptable total voltage drop rate is at most 15% and preferably 10% or less.

The total voltage drop rate includes: (1) a temporal voltage drop due to the long-term use (cell thermal degradation or the like); (2) a cycle-dependent voltage drop due to the start-and-stop operation; and (3) a voltage drop due to usage environment such as incorporation of impurities. However, among these, the invention focuses on "(2) a cycle-dependent voltage drop due to the start-and-stop operation".

Therefore, in Fig. 3 and Fig. 4, the cycle-dependent voltage drop rate due to the start-and-stop operation is simply referred to as the "voltage drop rate" and this is considered as an index of durability maintenance.

Specifically, a voltage drop rate, which is substantially influenced only by the start-and-stop operation, can be distinguish by measuring a voltage drop rate dependent on the number of times of the start-and-stop operation by a start-and-stop cycle test or the like and subtracting, from the measured value, a voltage drop rate estimated by a continuous operation test, an impurity incorporation test, or the like which is separately carried out.

If effects due to multiple factors are taken into consideration, the (narrowly-defined) voltage drop rate due to the 240 times of the start-and-stop operation is at most 5% and preferably 3% or less.

Therefore, it is desirable that the voltage drop rate due to 240 times of the start-and-stop operation be 5% or less and preferably 3% or less by suppressing the Ni oxidation degree after the stop to be low.

Fig. 5 illustrates a result obtained by measuring Ni oxidation degrees at each temperature of the upper end of the cell support 21 (maximum stack temperature at the time of stopping the reformed gas) that is the maximum temperature portion of the fuel cell stack 10 when the reformed gas is stopped at the stop process of the SOFC system (when the supply of the fuel gas to the reformer 6 is stopped and then the supply of the reformed gas to the fuel cell stack 10 is stopped).

From the view of Fig. 5, it is clear that the maximum stack temperature (cell upper end temperature) at the time of stopping the reformed gas needs to be set at about 400°C or lower (preferably, 330°C or lower) in order to suppress the Ni oxidation degree to be low. Therefore, this temperature can be determined as the "minimum oxidation temperature of nickel metal".

Therefore, regarding the stop control of the SOFC system, the fuel supply amount or the air supply amount to the fuel cell stack is appropriately controlled until the maximum stack temperature is below the minimum oxidation temperature of nickel metal, so that the Ni oxidation degree after the stop is suppressed to be within a predetermined threshold value.

The Ni oxidation degree is used as an index of durability evaluation to evaluate durability of the SOFC system. In addition, the system is designed such that this Ni oxidation degree becomes a predetermined value or less. Accordingly, at the time of the normal stop of the system, by performing the stop control to be described later, it is possible to keep the Ni oxidation degree after the stop within a predetermined value or less and to make the voltage drop rate due to 240 times of the start-and-stop operation be 5% or less, and preferably 3% or less.

Incidentally, regarding the design of the SOFC system, the Ni oxidation degree after the stop of actual equipment is measured and is provided on the design (setting of a power generation stop condition) with feedback such that the Ni oxidation degree is within a predetermined value.

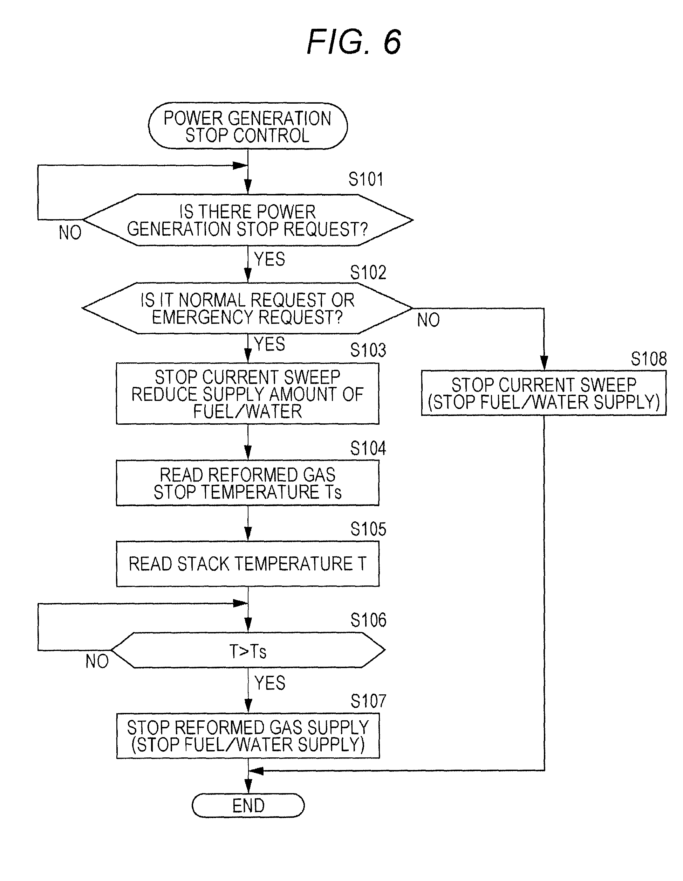

Fig. 6 is a flowchart of the power generation stop control.

In S101, it is determined whether there is a power generation stop request, and when there is a power generation stop request, the process proceeds to S102.

In S102, it is determined whether the power generation stop request is a normal request for regular maintenance or is an emergency shutdown (emergency S/D) request due to the occurrence of some type of system problem, or the like. This may be configured to be selectively operated by an inspector or user of the system.

At the normal request, the process proceeds to S103. The current sweep is stopped by opening a power generation circuit and the supply amount of fuel and water to the reformer is reduced at the same time.

In S104, a minimum oxidation temperature Ts of nickel metal is read. The minimum oxidation temperature Ts is stored on an internal memory and can be rewritten by a service technician at the time of maintenance or the like so that the Ni oxidation degree after the stop is a predetermined value or less.

In S105, a temperature (stack temperature) T of the fuel cell stack is measured by a temperature sensor in the system.

In S106, the measured stack temperature T and the minimum oxidation temperature Ts are compared with each other and then it is determined whether or not to be T ≤ (is less than or equal to) Ts.

When T > (is greater than) Ts, the process returns to S104 and S105, and the measurement and determination of the stack temperature T is continued. When T ≤ (is less than or equal to) Ts, the process proceeds to S107.

In S107, the supply of fuel and water to the reformer is stopped and the supply of reformed fuel to the fuel cell stack is stopped at the same time. Moreover, although not illustrated in the flow, the stack temperature T is monitored after that, and when the stack temperature T reaches room temperature, the system is completely stopped.

In this manner, when the Ni oxidation degree in the cell support of the fuel cell stack is controlled at the normal power generation stop request so that the Ni oxidation degree is suppressed to be a predetermined value or less, it is possible to suppress damages to the fuel cell stack due to the cycle of oxidation and reduction in accordance with the start-up and stop of the SOFC system.

There may be a case in which the emergency stop is necessary during operating the system due to some causes such as fuel shutoff, system power failure, or failure of various pumps.

In such a case, it is determined that the power generation stop request is urgently required in S102. The process proceeds to S108 and the current sweep and the supply of fuel and water are stopped at the same time.

In this case, it is not possible to lower the stack maximum temperature at the time of stopping the reformed gas to "oxidation minimum temperature of the nickel metal", and it is difficult to suppress the Ni oxidation degree in the cell support below a predetermined value.

Furthermore, the present inventors have found that even when performing an emergency stop incapable of performing the control at the time of the normal stop of the system, based on a cell destruction mechanism, in a temperature increase step before power generation that reduces the oxidized Ni by the temperature increase at the time of the system start-up, by suppressing the maximum temperature difference of the power generation unit of the fuel cell stack (a temperature difference between the maximum temperature of the upper end portion and the minimum temperature of the lower end portion) to a lower level, an increase in the stress generated in the power generation unit can be suppressed, and the cell destruction can be effectively suppressed in the following manner.

Tests and thermal stress analyses have revealed that at the time of start-up, as the maximum temperature difference of the stack power generation unit increases, the residual stress on the electrolyte layer or the interconnector unit requiring the gas shielding function increases.

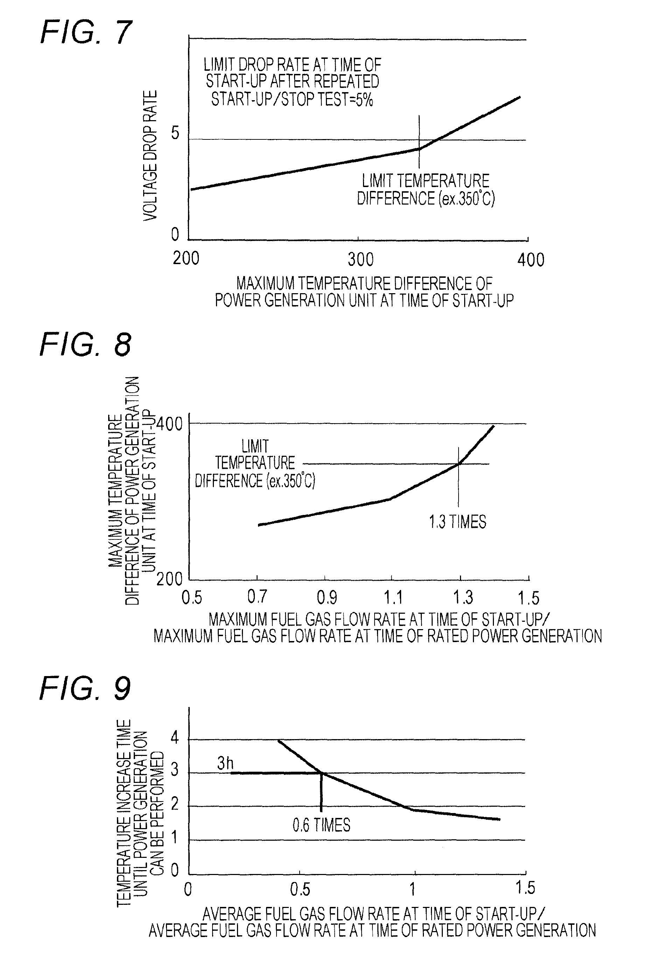

In addition, as a result of various tests and analyses, it has been revealed that depending on the conditions of the maximum temperature difference of the power generation unit at the time of start-up, there has been a problem of incomplete gas shielding function by cracking or detaching of the electrolytic layer or the interconnector unit due to a drop of the limit stress caused by the repeated start-up and stop operation. That is, as illustrated in Fig. 7, it has been found that in regard to the voltage drop (voltage drop rate) at the time of performing the repeated start-up and stop operation (for example, 240 times or more) occurring at the time period (for example, 10 years) capable of providing service as household power generation facilities, under the conditions in which the maximum temperature difference of the stack power generation unit at the time of start-up exceeds a limit temperature difference (for example, 350°C), the voltage drop rate exceeds a limit drop rate (for example, 5%), and thus, there has been a need to set the temperature difference to the limit temperature difference (350°C) or less.

Furthermore, it has been found that as a method of adjusting the maximum temperature difference of the stack power generation unit at the time of start-up, it is preferable to adjust a heat flow rate (heat flux), that is, the fuel gas flow rate supplied to the fuel cell stack 10 at the time of start-up. That is, as illustrated in Fig. 8, it has been found that assuming the fuel gas flow rate at the time of the rated power generation to be 1, it is possible to set the maximum temperature difference to 350°C or less by setting the maximum fuel gas flow at the time of start-up to 1.3 times or less, and an increase in the maximum temperature difference rapidly increases in the maximum fuel gas flow rate of 1.3 times or more. Furthermore, preferably, the maximum temperature difference can be set to 320°C or less in the maximum fuel gas flow rate of 1.2 times or less, and the reliability of durability can be further enhanced.

However, in the household system fueled by LPG and municipal gas, the start-up and stop operation occur at least once a month by restriction due to a household gas meter and circumstances of the customer.

For this reason, the start-up time from the start of start-up to the start of power generation is long, and as start-up energy increases, energy saving effect as an introduction purpose of the system is reduced. For this reason, the start-up time is preferably as short as possible, and is desired to be within 3 hours as a practical use.

Here, it has been found that it is effective to adjust the average fuel gas flow at the time of start-up in the adjustment of the start-up time. As illustrated in Fig. 9, it has been found that assuming the fuel gas flow rate at the time of the rated power generation to be 1, it is possible to set the start-up time within 3 hours by setting the average fuel gas flow rate at the time of start-up to 0.6 times or more, and meanwhile, when the average fuel gas flow rate is less than 0.6 times, the required start-up time rapidly increases.

In addition, even when "the maximum fuel gas flow rate at the time of start-up is set to be less than or equal to 1.3 times the maximum fuel gas flow rate at the time of the system rated power generation, and similarly, the average fuel gas flow rate is set to be equal to or greater than 0.6 times the average fuel gas flow rate at the time of the system rated power generation" in accordance with the abovementioned results, it has been found that there is a problem in that the combustion portion temperature exceeds 1000°C as the maximum member temperature that is in consideration of durability under certain conditions.

In contrast, by the further analysis, it has been found that the maximum member temperature can be reduced by characteristics in which the fuel gas flow rate is stepwise or gradually reduced. In particular, it has been found that when the flow rate of the start-up time of the system is assumed to be a first flow rate, the flow rate at a time at which the temperature of the fuel cell stack reaches a set temperature (for example, 300°C) set to the reduction starting temperature or more of oxidized Ni in the cell support is assumed to be a second flow rate, and the flow rate just before the start of power generation is assumed to be a third flow rate, it is possible to suppress the maximum member temperature to 1000°C or less by performing the control so as to satisfy the relationship of the first flow rate ≥ (is greater than or equal to) the second flow rate ≥ (is greater than or equal to) the third flow rate, and thus, the abovementioned problems can be solved.

Furthermore, it has been found that on this conditions, it is possible not only to satisfy the conditions of 350°C or less and the start-up time within 3 hours but also to reduce a cumulative fuel gas flow rate at the time of start-up compared to other conditions, and thus the conditions are preferable in view of energy saving.

Each of the embodiments of control at the time of start-up will be described below which can reduce the voltage drop rate to satisfy the required durability (practical service life), by reducing the fuel gas flow rate in response to the elapsed time so as to suppress the maximum temperature difference of the power generation unit of the fuel cell stack to a lower level, based on the abovementioned phenomenon characteristics found by the present inventors, in the temperature increase step at the time of system start-up, even when the Ni oxidation degree in the cell support increases by the sudden S/D. These embodiments are versatile start-up methods capable of suppressing the degradation, by using the start-up method illustrated in the same flow, even when performing the normal stop (including the normal stop using the conventional method that does not perform a special stop control of setting the Ni oxidation degree to a predetermined value or less).

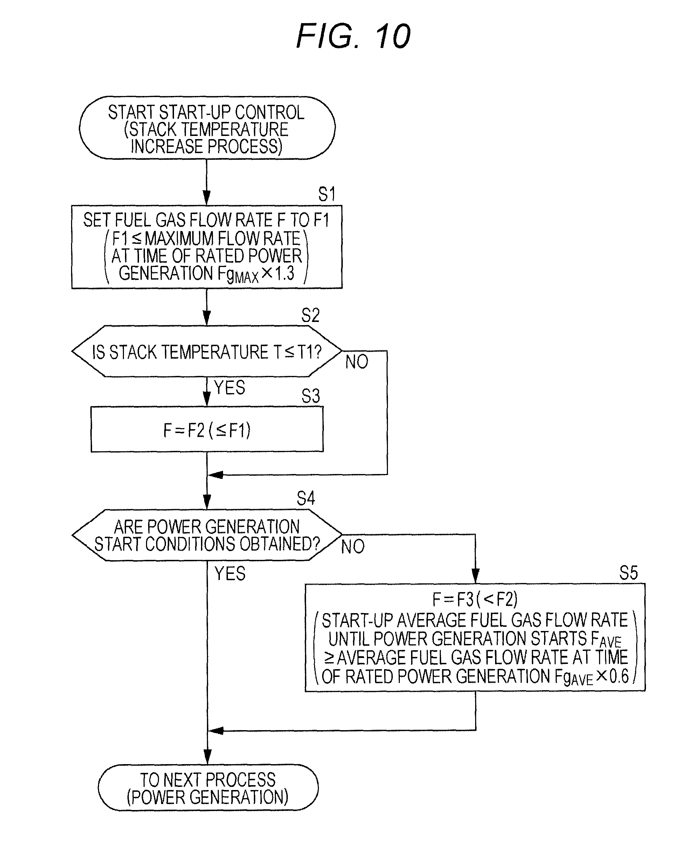

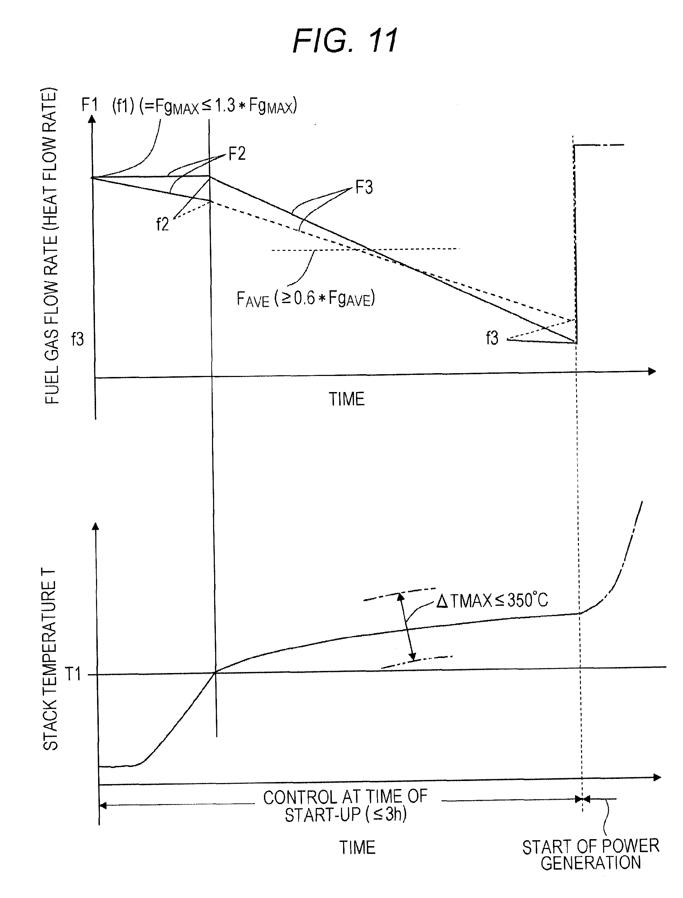

Fig. 10 is a flow chart of the start-up control according to the first embodiment, and Fig. 11 is a time chart illustrating the change during the control.

In S1, at the time of the start of start-up control, the heat flow rate supplied to the fuel cell stack 10 from the reformer 6, that is, the fuel gas flow rate F is set to the maximum fuel gas flow rate during the start-up control, and the maximum fuel gas flow rate $Fs_{MAX}$ is set to the fuel gas flow rate F1 that is less than or equal to 1.3 times the maximum fuel gas flow rate at the time of the rated power generation of the system, and more preferably, is less than or equal to 1.2 times.

In S2, it is determined whether the temperature of the fuel cell stack 10 (hereinafter, referred to as a stack temperature) T is less than or equal to the set temperature T1 in the temperature increase due to combustion in the combustion portion of the fuel gas. Here, the set temperature T1 is the temperature to be reduced at a predetermined speed or more by the fuel gas of the oxidized Ni in the cell support and is set to, for example, to 300°C.

In S2, when it is determined that the stack temperature T is less than or equal to the set temperature T1, that is, until reaching the set temperature T1, the fuel gas flow rate F2 is maintained at the value of flow rate F1 or less, that is, the maximum fuel gas flow rate F1 at the time of the start of start-up (solid lines in Fig. 11) or is set to decrease from that value (dashed lines in Fig, 11). In other words, the fuel gas flow rate F1 at the time of the start of start-up is set to the value of the fuel gas flow rate F2 or more at the time when the stack temperature T reaches the set temperature T1. Here, when F2 decreases from F1, F2 may be set to be gradually reduced from F1 as dashed lines of Fig. 11, but may be set to a fixed value smaller than F1.

After the stack temperature T reaches the set temperature T1, the process proceeds to S4, and it is determined whether the power generation start conditions are established. For example, the hydrogen-enriched reformed gas is generated in the reformer 6, and it is possible to set the time, at which the stack temperature T or more capable of satisfactorily performing the power generation by the reformed gas in the fuel cell stack 10 is obtained, as the power generation start conditions.

Until the power generation start conditions are satisfied, in S5, the fuel gas flow rate F3 decreases from F2. However, the average fuel gas flow rate $F_{AVE}$ from the start of start-up control to the start of the power generation is set to be equal to or greater than 0.6 times the average fuel gas flow rate $Fg_{AVE}$ at the time of the rated power generation. This may be set by obtaining the fuel gas flow characteristics up to the power generation start conditions in the test or the simulation in advance so as to satisfy the conditions. In addition, the fuel gas flow rate F3 may be set so that a fixed value is smaller than F2 or a value is gradually decreasing from F2, but at least the flow rate F3 just before the power generation start is set to decrease from F2.

According to such a control, first, by setting the maximum fuel gas flow rate during the start-up control to be less than or equal to 1.3 times the maximum fuel gas flow rate at the time of the rated power generation, the maximum temperature difference of the stack power generation unit can be set to 350°C or less. Furthermore, when the maximum fuel gas flow rate at the time of the start-up control is set to be less than or equal to 1.2 times the maximum fuel gas flow rate at the time of the rated power generation, the maximum temperature difference of the stack power generation unit can be reduced to 320°C or less.

By maintaining the maximum temperature difference $\Delta T_{MAX}$ of the stack power generation unit at 350°C or less, or 320°C or less as described above, it is possible to reduce the stress generated between the cell support and a cell configuration layer laminated thereon (a fuel electrode layer, an electrolyte layer, an air electrode layer or the like), or between each of the layers to the limit stress or less, and it is possible to suppress an occurrence of the separation between the layers or an abnormality leading to a cell destruction such as destruction of the cell support itself.

Furthermore, when the fuel gas flow rate F1 at the time of the start of start-up control is assumed to be a first flow rate f1, the fuel gas flow rate when the stack temperature reaches the set temperature (300°C) is assumed to be a second flow rate f2, and the fuel gas flow rate just before the power generation start is assumed to be a third flow rate f3, by stepwise or gradually reducing the fuel gas flow rate to reduce the temperature increase rate so as to satisfy the relationship of f1 ≥ (is greater than or equal to) f2 > (is greater than) f3, the temperature in the vicinity of the combustion portion as the maximum temperature of the power generation unit can be suppressed to a temperature less than or equal to the maximum member temperature (1000°C) that is in consideration of durability.

Meanwhile, by setting the average fuel gas flow rate $F_{AVE}$ from the start of start-up control to the start of the power generation to be equal to or greater than 0.6 times the average fuel gas flow rate $Fg_{AVE}$ at the time of the rated power generation, it is possible to set the start-up time period from the start of start-up control to the start of the power generation within 3 hours.

As a result of the satisfaction of the abovementioned requirements, it is possible to secure the durability of the times period (for example, 10 years) capable of providing service as household power generation facilities and to start the power generation as in short a time as possible, while maintaining the good power generation performance.

In addition, when performing an emergency shutdown of the system at a high temperature, since the Ni oxidation degree of the cell support increases compared to a case of the normal stop, in a case of performing the reduction at the same reducing rate at the time of the start-up control, the reduction requires time.

Even in that case, by performing the start-up control that satisfies the abovementioned respective conditions, it is possible to set the start-up time up to the start of the power generation within 3 hours, while maintaining the durability. In other words, the abovementioned respective values are set in consideration of the normal frequency (assuming 200 times or more for 10 years) that is urgently shutdown.

However, the start-up control after the normal stop and the start-up control after the emergency shutdown may be switched, while satisfying the abovementioned conditions.

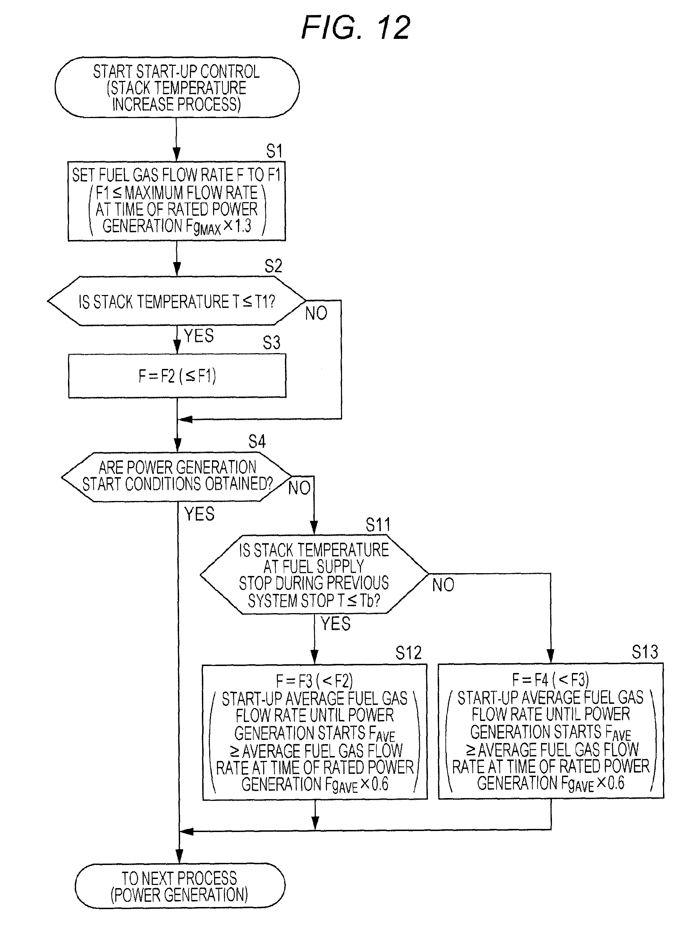

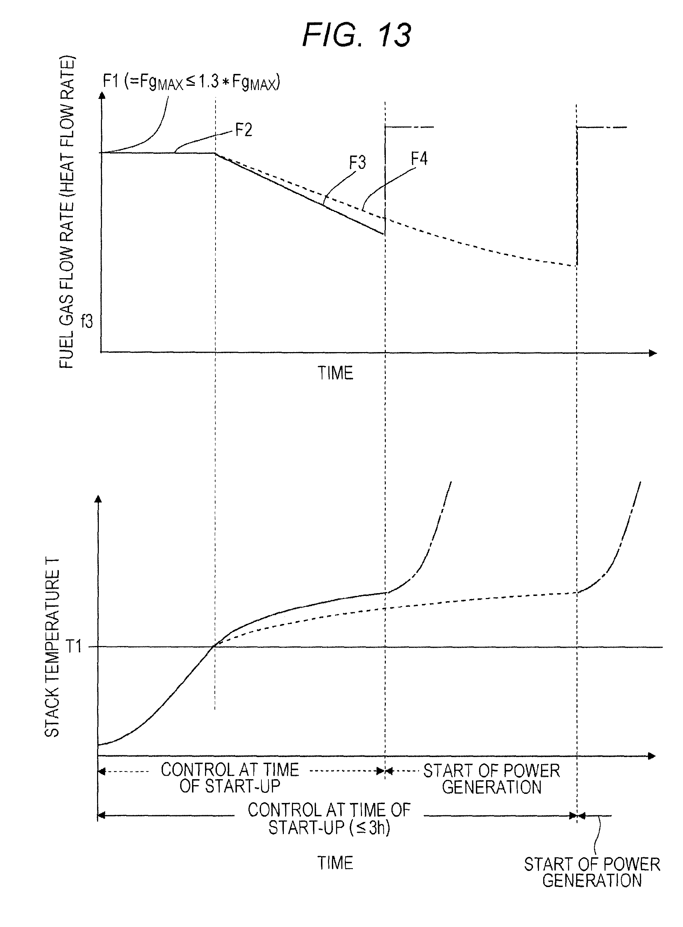

Fig. 12 is a flow chart of a second embodiment in which the start-up control after the normal stop and the start-up control after the emergency shutdown are switched, and Fig. 13 is a time chart illustrating a change during the control.

The control performed from the start of start-up control of S1 to S4 until the stack temperature T reaches the set temperature T1 ($300°C \pm 50°C$) at which the oxidized Ni in the cell support is reduced at a predetermined speed or more by the fuel gas is the same as the control of the first embodiment.

After the stack temperature T reaches the set temperature T1, in S11, it is determined whether the stack temperature T at the time of stopping the fuel supply during the previous system stop is less than or equal to a predetermined temperature Tb. Here, the predetermined temperature Tb is set to a temperature at which it is determined whether the Ni oxidation degree in the cell support is controlled within 3% by performing the power generation stop control at the time of stopping the system, and therefore, Tb is set to a value that is equal to the reformed gas stop temperature Ts or a value that is slightly greater than Ts.

When the stack temperature T at the time of the previous system stop is a predetermined temperature Tb or less, that is, when the control of setting the Ni oxidation degree in the cell support within a predetermined value is carried out by performing the power generation stop control at the time of stopping the system, the process proceeds to S12.

When the stack temperature T at the time of the previous system stop exceeds a predetermined temperature Tb, that is, when performing the emergency shutdown of the system in the state of the high stack temperature T, the process proceeds to S13.

In S12 and S13, the conditions are the same in which each fuel gas flow rate F3 and F4 decreases from F2, and the average fuel gas flow rate $F_{AVE}$ from the start of start-up control to the start of the power generation is set to be equal to or greater than 0.6 times the average fuel gas flow rate $Fg_{AVE}$ at the time of the rated power generation, but F4 is set to a value smaller than F3. In addition, a relationship of F4 < (is less than) F3 may be set between the fixed values, but as characteristics to be gradually reduced from F2, the drop rate F4 may be set to be greater than the drop rate of F3.

In this way, by reducing the fuel gas flow rate F3 after previously performing the emergency shutdown of the system from the fuel gas flow rate F4 after the normal stop, or by greatly increasing the drop rate, it is possible to further reduce the temperature increase rate of the stack temperature T, and to further lengthen a temperature zone in which the maximum temperature difference of the power generation unit is suppressed to a lower level. Accordingly, it is possible to perform the reducing treatment of the oxidized Ni having the large oxidation degree in the cell support, while maintaining the durability.

Meanwhile, at the time of the start-up control after the normal stop, the temperature increase rate of the stack temperature T as fuel gas flow rate F3 greater than the rate at the time of the emergency shutdown is set to be greater than at the time of the emergency shutdown, so that it is possible to more rapidly reduce the oxidized Ni in the cell support in which the Ni oxidation degree is controlled within a predetermined value. In addition, even when the temperature increase rate is greater than that at the time of the emergency shutdown, the maximum temperature difference can be maintained at 350°C or less, and the reducing treatment time can also be reduced. Accordingly, it is possible to secure the satisfactory power generation performance while maintaining the satisfactory durability.

Thus, in the second embodiment, by switching the start-up control depending on the Ni oxidation degree after the stop of the system , it is possible to maintain the durability during the practical period of the system and to shorten the time up to the start of the power generation as much as possible, while maintaining the satisfactory power generation performance.

Moreover, each control described above is a control method which is not broken down as a control system even when a change in external temperature or a temporal change occurs and is based on a cell damage principle. In accordance with full-scale popularization of the SOFC system from now, this control method is considered to be a technique capable of applying to the system even if components are simplified or a control system is simplified.

Incidentally, the embodiments illustrated in the figures are merely examples of the present invention, and of course, the invention includes those directly specified by the described embodiments, as well as various improvements and modifications, which can be conceived by one skilled in the art within the scope of the appended claims.

REFERENCE SIGNS LIST

| | |
|---|---|
| 1 | Hot module |
| 2 | Module case |
| 3 | Supply tube of fuel, water and air for ATR |
| 4 | Supply tube of air for cathode |
| 5 | Exhaust port |
| 6 | Reformer |
| 6a | Reformed gas outlet |
| 7 | Reformed gas supply tube |
| 8 | Manifold |
| 10 (10-1, 10-2) | Fuel cell stack |
| 20 | Fuel cell |
| 21 | Cell support |
| 22 | Gas passage |
| 23 | Fuel electrode layer |
| 24 | Solid oxide electrolyte layer |
| 25 | Air electrode layer |
| 26 | Interconnector |
| 30 | Collector member |
| 40 | Conductive member |
| 50 | Control unit |
| 51 | Temperature sensor |

**Claims**

1. A solid-oxide fuel cell system configured to include: a reformer that generates a hydrogen-enriched fuel gas by a reforming reaction; a fuel cell stack that is provided with a passage of the fuel gas, includes a cell support made of a porous substance having a composition containing a nickel metal, and allows the fuel gas to react with air to generate power; and a module case that surrounds the reformer and the fuel cell stack, in the inside of which excessive fuel gas of the fuel cell stack is combusted to increase temperatures of the reformer and the fuel cell stack so that the reformer and the fuel cell stack are maintained in a high temperature state,
the solid-oxide fuel cell system comprising
a start-up control unit that performs a decrease control of a fuel gas flow rate supplied to the fuel cell stack from the reformer in response to an elapsed time so that a maximum temperature difference of a power generation unit of the fuel cell stack is maintained below a limit temperature difference that is set in consideration of durability of the power generation unit, in a temperature increase step before power generation that increases the temperature of the fuel cell stack to reduce the oxidized nickel metal when the system starts up.

2. The solid-oxide fuel cell system according to claim 1, wherein the start-up control unit controls the fuel gas flow rate so as to maintain the maximum temperature difference of the power generation unit of the fuel cell stack at 350°C or less in the temperature increase step.

3. The solid-oxide fuel cell system according to claim 2, wherein the start-up control unit controls the fuel gas flow rate in the temperature increase step to be less than or equal to 1.3 times the maximum flow rate at the time of a rated power generation of the system, and controls an average flow rate to be less than or equal to 0.6 times an average flow rate at the time of the rated power generation of the system.

4. The solid-oxide fuel cell system according to claim 1, wherein in a case in which the fuel stack temperature when stopping the fuel supply to the reformer at the time of stopping the system before start-up of the system exceeds a predetermined temperature Tb, the start-up control unit controls a decreasing degree of the fuel gas flow rate to a greater level compared to that when the fuel stack temperature does not exceed the predetermined temperature.

5. The solid-oxide fuel-cell system according to claim 1, further comprising a stop-time control unit that controls, at the time of normal stop of the system, the oxidation degree of nickel metal after the stop to be a predetermined value or less.

6. The solid-oxide fuel-cell system according to claim 5,
wherein the oxidation degree of nickel metal is calculated based on a Ni oxidation degree defined by the following formula:

Ni oxidation degree = (Number of moles of Ni atoms which are present as NiO among Ni atoms contained in a cell main body) / (Number of moles of all Ni atoms in the cell main body) x 100 (%), and
wherein the stop-time control unit controls the oxidation degree after the normal stop of the system to be a predetermined value or less.

7. A start-up method of a solid-oxide fuel cell system configured to include: a reformer which generates a hydrogen-enriched fuel gas by a reforming reaction; a fuel cell stack which includes a cell support made of a porous substance having a composition containing at least nickel metal, and allows the reaction of the fuel gas from the reformer with air to generate power; and a module case which surrounds the reformer and the fuel cell stack, in the inside of which excessive fuel gas of the fuel cell stack is combusted to increase temperatures of the reformer and the fuel cell stack so that the reformer and the fuel cell stack are maintained in a high temperature state,
the method comprising:

performing a decrease control of a fuel gas flow rate supplied to the fuel cell stack from the reformer in response to an elapsed time so that a maximum temperature difference of a power generation unit of the fuel cell stack is maintained below a limit temperature difference that is set in consideration of durability of the power generation unit, in a temperature increase step before power generation that increases the temperature of the fuel cell stack when the system starts up.

# FIG. 1

## FIG. 2

## FIG. 3

CORRELATION BETWEEN Ni OXIDATION
DEGREE AND CELL VOLTAGE DROP RATE

o OXIDATION DEGREE 0.8%
△ OXIDATION DEGREE 1.2%
□ OXIDATION DEGREE 2.8%
× OXIDATION DEGREE 3.3%
* OXIDATION DEGREE 10%

NUMBER OF START-UP
AND STOP (TIMES)

16

# FIG. 4

CORRELATION BETWEEN Ni OXIDATION
DEGREE AND VOLTAGE DROP RATE AFTER
PERFORMING START-UP AND STOP 240 TIMES

# FIG. 5

MAXIMUM STACK TEMPERATURE AT TIME
OF STOPPING REFORMED GAS
(TEMPERATURE OF UPPER END OF CELL) (°C)

# FIG. 6

```
        ┌─────────────────────┐
        │  POWER GENERATION   │
        │   STOP CONTROL      │
        └─────────────────────┘
                  │
                  ▼                          S101
        ╱─────────────────────╲
   ┌───◁    IS THERE POWER     ▷
   │ NO ╲ GENERATION STOP REQUEST? ╱
   │    ╲─────────────────────╱
   │             │ YES
   │             ▼                           S102
   │   ╱─────────────────────╲
   │  ◁  IS IT NORMAL REQUEST OR  ▷─── NO ─────────────┐
   │   ╲   EMERGENCY REQUEST?  ╱                        │
   │    ╲─────────────────────╱                         │
   │             │ YES                                   │
   │             ▼          S103                         ▼                  S108
   │   ┌─────────────────────┐             ┌─────────────────────────┐
   │   │  STOP CURRENT SWEEP │             │   STOP CURRENT SWEEP    │
   │   │ REDUCE SUPPLY AMOUNT OF │          │ (STOP FUEL/WATER SUPPLY)│
   │   │      FUEL/WATER     │             └─────────────────────────┘
   │   └─────────────────────┘                          │
   │             │          S104                         │
   │             ▼                                        │
   │   ┌─────────────────────┐                          │
   │   │   READ REFORMED GAS │                          │
   │   │  STOP TEMPERATURE Ts│                          │
   │   └─────────────────────┘                          │
   │             │          S105                         │
   │             ▼                                        │
   │   ┌─────────────────────┐                          │
   │   │ READ STACK TEMPERATURE T │                     │
   │   └─────────────────────┘                          │
   │             │                                        │
   │             ▼          S106                          │
   │   ╱─────────────────────╲                          │
   ├──◁         T>Ts          ▷                          │
   │NO ╲─────────────────────╱                          │
                 │ YES                                    │
                 ▼          S107                          │
       ┌─────────────────────────┐                       │
       │  STOP REFORMED GAS SUPPLY │                     │
       │ (STOP FUEL/WATER SUPPLY) │                      │
       └─────────────────────────┘                       │
                 │◄──────────────────────────────────────┘
                 ▼
        ┌─────────────┐
        │     END     │
        └─────────────┘
```

FIG. 7

VOLTAGE DROP RATE

LIMIT DROP RATE AT TIME OF
START-UP AFTER REPEATED
START-UP/STOP TEST=5%

5

LIMIT TEMPERATURE
DIFFERENCE (ex.350°C)

0

200          300          400

MAXIMUM TEMPERATURE DIFFERENCE OF
POWER GENERATION UNIT AT TIME OF START-UP

FIG. 8

MAXIMUM TEMPERATURE DIFFERENCE OF POWER GENERATION UNIT AT TIME OF START-UP

400

LIMIT
TEMPERATURE
DIFFERENCE (ex.350°C)

1.3 TIMES

200

0.5     0.7     0.9     1.1     1.3     1.5

MAXIMUM FUEL GAS FLOW RATE AT TIME OF START-UP/
MAXIMUM FUEL GAS FLOW RATE AT TIME OF RATED POWER GENERATION

FIG. 9

TEMPERATURE INCREASE TIME UNTIL POWER GENERATION CAN BE PERFORMED

4

3h    3

2

0.6 TIMES

1

0

0          0.5          1          1.5

AVERAGE FUEL GAS FLOW RATE AT TIME OF START-UP/
AVERAGE FUEL GAS FLOW RATE AT TIME OF RATED POWER GENERATION

# FIG. 10

START START-UP CONTROL
(STACK TEMPERATURE
INCREASE PROCESS)

S1
SET FUEL GAS FLOW RATE F TO F1
$\left(\begin{array}{c} \text{F1} \leq \text{MAXIMUM FLOW RATE} \\ \text{AT TIME OF RATED POWER} \\ \text{GENERATION Fg}_{MAX} \times 1.3 \end{array}\right)$

S2
IS STACK TEMPERATURE $T \leq T1$?  NO

YES  S3
$F = F2\ (\leq F1)$

S4
ARE POWER GENERATION
START CONDITIONS OBTAINED?  NO

YES

S5
$F = F3\ (< F2)$
$\left(\begin{array}{c} \text{START-UP AVERAGE FUEL GAS FLOW RATE} \\ \text{UNTIL POWER GENERATION STARTS F}_{AVE} \\ \geq \text{AVERAGE FUEL GAS FLOW RATE AT TIME} \\ \text{OF RATED POWER GENERATION Fg}_{AVE} \times 0.6 \end{array}\right)$

TO NEXT PROCESS
(POWER GENERATION)

# FIG. 11

FUEL GAS FLOW RATE (HEAT FLOW RATE)

F1 (f1) $(=Fg_{MAX} \leq 1.3 * Fg_{MAX})$

F2

F3

f2

$F_{AVE} (\geq 0.6 * Fg_{AVE})$

f3

f3

TIME

STACK TEMPERATURE T

T1

$\triangle TMAX \leq 350°C$

CONTROL AT TIME OF START-UP ($\leq$3h)

TIME

START OF POWER GENERATION

# FIG. 12

START START-UP CONTROL
(STACK TEMPERATURE
INCREASE PROCESS)

↓

S1

SET FUEL GAS FLOW RATE F TO F1
$\left(\begin{array}{c}\text{F1} \leq \text{MAXIMUM FLOW RATE} \\ \text{AT TIME OF RATED POWER} \\ \text{GENERATION } Fg_{MAX} \times 1.3\end{array}\right)$

↓

S2

IS STACK TEMPERATURE T ≤ T1? — NO

↓ YES

S3

F = F2 (≤ F1)

↓

S4

ARE POWER GENERATION
START CONDITIONS OBTAINED? — NO

↓ YES

S11

IS STACK TEMPERATURE
AT FUEL SUPPLY
STOP DURING PREVIOUS
SYSTEM STOP T ≤ Tb? — NO

↓ YES

S12

F = F3 ( < F2)
$\left(\begin{array}{c}\text{START-UP AVERAGE FUEL GAS} \\ \text{FLOW RATE UNTIL POWER} \\ \text{GENERATION STARTS } F_{AVE} \\ \geq \text{AVERAGE FUEL GAS FLOW} \\ \text{RATE AT TIME OF RATED POWER} \\ \text{GENERATION } Fg_{AVE} \times 0.6\end{array}\right)$

S13

F = F4 ( < F3)
$\left(\begin{array}{c}\text{START-UP AVERAGE FUEL GAS} \\ \text{FLOW RATE UNTIL POWER} \\ \text{GENERATION STARTS } F_{AVE} \\ \geq \text{AVERAGE FUEL GAS FLOW} \\ \text{RATE AT TIME OF RATED POWER} \\ \text{GENERATION } Fg_{AVE} \times 0.6\end{array}\right)$

↓

TO NEXT PROCESS
(POWER GENERATION)

22

## FIG. 13

**INTERNATIONAL SEARCH REPORT**

| | International application No. |
|---|---|
| | PCT/JP2012/078722 |

A. CLASSIFICATION OF SUBJECT MATTER
*H01M8/04*(2006.01)i, *H01M8/02*(2006.01)i, *H01M8/06*(2006.01)i, *H01M8/12* (2006.01)i

According to International Patent Classification (IPC) or to both national classification and IPC

B. FIELDS SEARCHED

Minimum documentation searched (classification system followed by classification symbols)
H01M8/04, H01M8/02, H01M8/06, H01M8/12

Documentation searched other than minimum documentation to the extent that such documents are included in the fields searched
 Jitsuyo Shinan Koho   1922-1996 Jitsuyo Shinan Toroku Koho 1996-2013
 Kokai Jitsuyo Shinan Koho 1971-2013 Toroku Jitsuyo Shinan Koho 1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-96432 A (Kyocera Corp.), 12 May 2011 (12.05.2011), paragraphs [0020] to [0028], [0072] to [0079]; fig. 1, 3, 4 (Family: none) | 1-7 |
| A | JP 2011-181490 A (Topsoe Fuel Cell A/S), 15 September 2011 (15.09.2011), paragraphs [0007], [0008], [0099] to [0105]; fig. 1, 3, 4 & US 2011/0146154 A1 & EP 2336083 A1 & CN 102104166 A & KR 10-2011-0069727 A & AU 2010253491 A & RU 2010151606 A & CA 2725699 A1 | 1-7 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 January, 2013 (28.01.13) | 05 February, 2013 (05.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/078722 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-335163 A  (Mitsubishi Materials Corp., The Kansai Electric Power Co., Inc.), 25 November 2004 (25.11.2004), paragraphs [0024], [0031] to [0039]; fig. 1 (Family: none) | 1-7 |
| A | JP 11-162492 A  (Tokyo Gas Co., Ltd.), 18 June 1999 (18.06.1999), paragraphs [0023] to [0031]; fig. 1 (Family: none) | 1-7 |
| A | JP 2008-311030 A  (Nippon Oil Corp.), 25 December 2008 (25.12.2008), paragraphs [0002], [0007], [0039], [0040], [0069] to [0090] & US 2010/0173208 A1     & EP 2173000 A1 & WO 2008/153011 A1     & CA 2689674 A & CN 101682063 A     & KR 10-2010-0034746 A & TW 200917560 A | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4565980 B